# EUROPÄISCHE PATENTANMELDUNG

(11) **EP 1 521 158 A1**
(43) Veröffentlichungstag der Anmeldung: **06.04.2005**
(21) Anmeldenummer: 04016889.0
(22) Anmeldetag: 16.07.2004
(51) Int. Cl.: G06F 1/00

(54) **Verfahren zur Sicherung eines Computersystems**

(30) Priorität: 07.08.2003 DE 10336246
(71) Anmelder: Fujitsu Siemens Computers GmbH, 80807 München (DE)
(72) Erfinder: Ahn, Georg, 86179 Augsburg (DE); Braun, Markus, 86754 Munningen (DE)
(74) Vertreter: Epping - Hermann - Fischer

(57) **Zusammenfassung**

Die Erfindung betrifft ein Verfahren zur Sicherung eines Computersystems (1) mit wahlweise verschiedenen Anwendern (3, 4) mit verschiedenen Berechtigungen (3a, 4a), mit zumindest einer Schnittstelle (2) zum Austausch von Daten mit zumindest einem internen oder externen Peripheriegerät (5) wobei die Schnittstelle (2) aktiviert ist, wenn das Peripheriegerät (5) autorisiert ist oder wenn die Berechtigung (3a, 4a) des aktuellen Anwenders (3, 4) die Schnittstelle (2) aktiviert.

## Beschreibung

Die Erfindung betrifft ein Verfahren zur Sicherung eines Computersystems mit wahlweise verschiedenen Anwendern, mit verschiedenen Berechtigungen, mit zumindest einer Schnittstelle zum Austausch von Daten mit zumindest einem internen oder externen Peripheriegerät.

Schnittstellen an Computersystemen, dienen dazu PeripherieGeräte an das Computersystem anzuschließen, um diese Peripherie-Geräte mit dem Computersystem zu betreiben. Dies sind zum Beispiel Datenlaufwerke, Scanner, Drucker andere Computer usw..

Die zunehmende Vereinheitlichung von Schnittstellen, die es ermöglicht, verschiedenste Geräte an ein und der selben Schnittstelle, wechselweise oder gar auch parallel anzuschließen, erschwert es zunehmend Computersysteme vor unberechtigtem Zugriff durch, beziehungsweise über diese vereinheitlichten Schnittstellen zu schützen. Darüber hinaus bieten moderne Betriebssysteme oftmals die Möglichkeit Schnittstellen zu nutzen, auch wenn diese durch das sogenannte BIOS, das Basic Input/Output System des Computers, das als Schnittstelle zwischen Hardware und Betriebssystem fungiert, nicht freigegeben sind. Dies gilt sowohl für physikalische Schnittstellen, als auch für logische Schnittstellen. Als physikalische Schnittstellen sind zu bezeichnen, jeder Stecker oder Buchse an einem Computersystem und als logische Schnittstelle sind zum Beispiel die Trennung einer Festplatte in unterschiedliche Partitionen zu verstehen, wobei jede Partition als eigenes Laufwerk innerhalb eines Betriebssystems über eine logische Schnittstelle ansprechbar ist. Da diese Laufwerke sich physikalisch auf einer Festplatte befinden, und keine realen Laufwerke darstellen, werden sie als virtuelle Laufwerke bezeichnet. Dies erfordert eine Logik, zum Beispiel in Form einer Software, innerhalb des Betriebssystems, die diese beiden Partitionen als unterschiedliche Laufwerke erkennt und betreibt. Dies ist ein Beispiel für eine logische Schnittstelle.

Ist ein Computersystem mehreren Benutzern zugänglich, die gegebenenfalls mit unterschiedlichen Berechtigungen auf dieses Computersystem wirken, so kann jedem einzelnen Benutzer durch die Berechtigungsvergabe eine unterschiedliche Systemressource des Computersystems zur Verfügung gestellt werden. Problematisch wird es allerdings bei der Berechtigungsvergabe in Bezug auf die oben genannten Schnittstellen. Hier ist es oftmals nicht möglich das Nutzen von Schnittstellen, zum Beispiel USB, einem Benutzer zuzuweisen.

Es ist daher die Aufgabe der Erfindung, unter Umgehung der oben genannten Nachteile ein Computersystem vor unberechtigtem Zugriff abzusichern.

Diese Aufgabe wird gelöst, durch ein Verfahren zur Sicherung eines Computersystems mit wahlweise verschiedenen Anwendern mit verschiedenen Berechtigungen, mit zumindest einer Schnittstelle zum Austausch von Daten mit zumindest einem internen oder externen Peripheriegerät, wobei die Schnittstelle aktiviert ist, wenn das Peripheriegerät autorisiert ist, oder wenn die Berechtigung des aktuellen Anwenders eine Aktivierung der Schnittstelle zulässt.

Vorteilhaft an dem erfindungsgemäßen Verfahren ist, daß vor der Aktivierung der Schnittstelle, Berechtigungen zur Aktivierung der Schnittstelle erforderlich sind. Das heißt, verfügt der aktuelle Anwender nicht über die Berechtigung die Schnittstelle zu benutzen, so wird diese nicht aktiviert. Dem Anwender ist somit nicht möglich ein Gerät an diese Schnittstelle anzuschließen und zu betreiben. Ebenso gilt, daß ein Gerät das an einer Schnittstelle betrieben werden soll, dem Computersystem, in gewisser Weise, bekannt sein muß, und das Computersystem für dieses Gerät eine Berechtigung zum Betrieb an der Schnittstelle ausweisen muß. Diese beiden Varianten sind erfindungsgemäß wahlweise benutzbar und kombinierbar.

Das Verfahren eignet sich prinzipiell nicht nur für physikalische Schnittstellen, wie zum Beispiel der Schnittstelle für eine Festplatte, einen Scanner, einen Drucker, einen USB-Anschluss oder ähnliches, sondern eignet sich ebenso für logische Schnittstellen, wie zum Beispiel die Schnittstelle zu logischen Festplattenpartitionen, die als eigene Laufwerke durch das Betriebssystem ansprechbar sind.

Zur Übermittlung der Berechtigungen für die Anwender des Computersystems bieten sich verschiedene Möglichkeiten an. Die Erfindung sieht in einer vorteilhaften Ausführungsform vor, die Berechtigung beziehungsweise die Autorisierung auf einem externen Gerät zu speichern und dieses bei Bedarf mit dem Computer zu verbinden. Das Computersystem entnimmt dem externen Gerät, das zum Beispiel eine Chipkarte sein kann, Informationen über den aktuellen Anwender und weist so dem aktuellen Anwender die Berechtigung für verschiedene Systemressourcen des Computersystems zu. Dazu gehört auch die Berechtigung für die Schnittstelle. Ist in dem externen Gerät eine Information enthalten, die eine Berechtigung zur Nutzung der Schnittstelle durch den aktuellen Anwender ausweist, so wird die Schnittstelle aktiviert.

Als externes Gerät eignen sich außer Chipkarten alle anderen elektronischen Geräte, die ein Anwender persönlich bei sich trägt und die mit dem Computersystem verbindbar sind. Dies ist zum Beispiel ein Mobiltelefon, ein PDA und ähnliches. Die Verbindung zu diesen Gerät kann über verschiedene Wege, die zum allgemeinen Stand der Technik gehören und nicht Teil dieser Erfindung sind, stattfinden. So ist eine Verbindung über Funkstrecken oder über Draht gebundene Strecken mit diesem Gerät möglich.

Die Art und Weise der Aktivierung oder Deaktivierung der Schnittstelle erfolgt in Abhängigkeit davon, ob es sich um eine physikalische oder um eine logische Schnittstelle handelt. Im Falle einer physikalischen Schnittstelle schlägt die Erfindung zum Beispiel folgendes vor. Eine Steuerelektronik, die den Datenaustausch des Computersystems mit dem an der Schnittstelle über einen Steckkontakt angeschlossenem Peripheriegerät steuert, zu deaktivieren oder zu aktivieren. Weiterhin schlägt die Erfindung vor, die drahtgebundene Schnittstelle durch Schaltkontakte die auch elektronisch ausführbar sind zu deaktivieren oder zu aktivieren, so daß ein Datenaustausch mit einem angeschlossenen Gerät nicht durchführbar ist. Im Falle einer logischen Schnittstelle ist eine Software basierte logische Schnittstellensteuerung zu aktivieren beziehungsweise zu deaktivieren um die Schnittstelle zu aktivieren oder zu deaktivieren.

Im folgenden ist die Erfindung anhand eines Ausführungsbeispiels näher erläutert.
Figur 1 zeigt eine schematische Darstellung des Verfahrens mit verschiedenen Anwendern,
Figur 2 zeigt eine schematische Darstellung des Verfahrens mit autorisierten Peripheriegeräten.

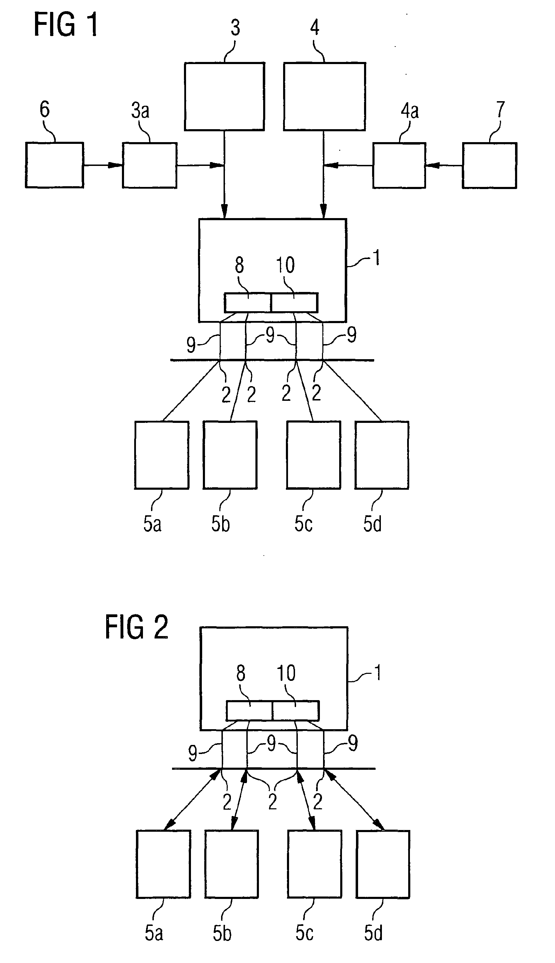

Ein im Zentrum der Figur 1 dargestelltes Computersystem 1 verfügt über eine Schnittstelle 2. Ein erster Anwender 3 oder ein zweiter Anwender 4 haben Zugriff zu dem Computersystem 1 und den über die Schnittstelle 2 mit dem Computersystem 1 verbundenen Peripheriegeräten 5a bis 5d. Jeder der beiden Anwender 3 oder 4 verfügt über unterschiedliche Berechtigungen 3a oder 4a, die er über ein mitgeführtes externes Gerät 6 oder 7, das er mit dem Computersystem verbindet. Damit übermittelt der Anwender 3 oder 4 seine Berechtigungen 3a und 4a dem Computersystem.

Über die Berechtigungen 3a und 4a erhält das Computersystem 1 die Information, ob die Schnittstelle 2 für den aktuellen Anwender aktiviert werden soll oder nicht. Zur Aktivierung der Schnittstelle 2 aktiviert das Computersystem eine Steuerelektronik 8, die die elektronische Ansteuerung der Schnittstelle und damit des angeschlossenen Peripheriegerätes 5 übernimmt. Die Aktivierung beziehungsweise die Deaktivierung der Steuerelektronik 8 hat somit die Aktivierung beziehungsweise die Deaktivierung des Peripheriegerätes zur Folge.

Jedes Peripheriegerät 5a bis 5d ist über eine Verbindungsleitung 9 mit dem Computersystem verbunden. Diese Verbindungsleitung 9 führt vom Computersystem 1 zur Schnittstelle 2. Es bietet sich damit eine weitere Möglichkeit der Aktivierung beziehungsweise Deaktivierung der Schnittstelle und damit des Peripheriegerätes 5 an. Diese erfolgt in diesem Beispiel durch einfaches Abschalten der Verbindungsleitung 9, wobei sich manuelle oder automatische Schalter ebenso wie elektronische Schalter eignen. Vorzugsweise sind jedoch elektronische Schalter zu verwenden.

Zur Aktivierung oder Deaktivierung von logischen Schnittstellen wie dies zum Beispiel zwei unterschiedliche Partitionen von Festplatten darstellen, die zwei logische Laufwerke bilden, die auf einem physikalischen Laufwerk abgebildet sind, benötigt man logische Schnittstellen, die es wiederum ermöglichen diese beiden logischen Laufwerke auf dem einen physikalischen Laufwerk als zwei logische Laufwerke anzusprechen. Dies ist dargestellt durch eine Logiksteuerung 10 die den Datenaustausch des Computersystems 1 mit der Schnittstelle 2 und den logischen Peripheriegeräten 5c und 5d durchführt.

Ein Peripheriegerät 5, das an dem Computersystem 1 über die Schnittstelle 2 angeschlossen ist, ist somit nur bei entsprechender Berechtigung 3a oder 4a durch den Anwender 3 oder 4 am Computersystem 1 zu betreiben.

Figur 2 zeigt ein anderes Ausführungsbeispiel, mit dem Computersystem 1 und mit der Schnittstelle 2, an dem das Peripheriegerät 5 anschließbar ist. Wobei hier die Berechtigung beziehungsweise die Aktivierung der Schnittstelle nicht durch den Anwender und dessen Berechtigung erfolgt, sondern vielmehr über eine Registrierung des Peripheriegerätes 5 am Computersystem 1. Wird an das Computersystem 1 ein Peripheriegerät 5a bis 5d angeschlossen, so übermittelt das Peripheriegerät 5a bis 5d dem Computersystem 1 eine Information womit das Peripheriegerät 5a bis 5d sich gegenüber dem Computersystem identifiziert. Ist dem Computersystem 1 dieses Peripheriegerät 5a bis 5d noch nicht bekannt oder verfügt das Peripheriegerät nicht über die Berechtigung an dem Computersystem betrieben zu werden, so wird die Schnittstelle die den Datenaustausch mit diesem Peripheriegerät durchführt deaktiviert.

### Bezugszeichenliste

- 1: Computersystem
- 2: Schnittstelle
- 3: Anwender, erster
- 3a: Berechtigung des ersten Anwenders
- 4: Anwender, zweiter
- 4a: Berechtigung des zweiten Anwenders
- 5(a-d): Peripheriegerät
- 6: Externes Gerät, erstes
- 7: Externes Gerät, zweites
- 8: Steuerelektronik
- 9: Verbindungsleitungen
- 10: Logiksteuerung

## Patentansprüche

1. Verfahren zur Sicherung eines Computersystems (1) mit wahlweise verschiedenen Anwendern (3, 4), mit verschiedenen Berechtigungen (3a, 4a), mit zumindest einer Schnittstelle (2) zum Austausch von Daten mit zumindest einem internen oder externen Peripheriegerät (5),
**dadurch gekennzeichnet, daß**
die Schnittstelle (2) aktiviert ist, wenn das Peripheriegerät (5) autorisiert ist, oder wenn die Berechtigung (3a, 4a) des aktuellen Anwenders (3, 4) eine Aktivierung der Schnittstelle (2) zulässt.

2. Verfahren nach Patentanspruch 1,
**dadurch gekennzeichnet, daß**
die Schnittstelle (2) eine physikalische oder logische Schnittstelle ist.

3. Verfahren nach Patentanspruch 1 bis 2,
**dadurch gekennzeichnet, daß**
die Autorisierung auf einem externen Gerät (6, 7) gespeichert ist, das mit dem Computersystem (1) verbindbar ist.

4. Verfahren nach Patentanspruch 3,
**dadurch gekennzeichnet, daß**
das externe Gerät (6, 7) eine Chipkarte, ein Bluetooth-Gerät, ein Mobiltelefon oder ein PDA ist.

5. Verfahren nach Patentanspruch 1 bis 4,
**dadurch gekennzeichnet, daß**
die Schnittstelle (2) dadurch aktiviert wird, daß eine Steuerelektronik (8) im Computersystem (1) zur Steuerung des Betriebs der Schnittstelle (2) aktiviert wird.

6. Verfahren nach Patentanspruch 1 bis 4,
**dadurch gekennzeichnet, daß**
die Schnittstelle (2) dadurch aktiviert wird, daß Verbindungsleitungen (9) zur Schnittstelle (2) geschlossen werden.

7. Verfahren nach Patentanspruch 1 bis 4,
**dadurch gekennzeichnet, daß**
die Schnittstelle (2) dadurch aktiviert wird, daß eine Logiksteuerung (10) zur Steuerung des Betriebs einer logischen Schnittstelle (2) aktiviert wird.
